# EUROPÄISCHE PATENTSCHRIFT

(11) **EP 1 196 681 B1**
(45) Veröffentlichungstag und Bekanntmachung des Hinweises auf die Patenterteilung: **17.09.2003**
(21) Anmeldenummer: 00936658.4
(22) Anmeldetag: 29.04.2000
(51) Int. Cl.: F01N 11/00, B01D 53/94

(54) **VERFAHREN ZUR DEFINIERTEN FETT-/MAGERSTEUERUNG EINES VERBRENNUNGSGEMISCHES**
METHOD FOR CONTROLLING A RICH/LEAN COMBUSTION MIXTURE IN A DEFINED MANNER
PROCEDE POUR OBTENIR, DE MANIERE DEFINIE, UN MELANGE DE GAZ DE COMBUSTION SOIT RICHE SOIT PAUVRE

(30) Priorität: 19.05.1999 DE 19922981; 20.05.1999 DE 19923044
(43) Veröffentlichungstag der Anmeldung: 17.04.2002
(73) Patentinhaber: ROBERT BOSCH GMBH, 70442 Stuttgart (DE)
(72) Erfinder: STAHL, Roland, D-71691 Freiberg (DE)
(86) Internationale Anmeldenummer: DE0001378
(87) Internationale Veröffentlichungsnummer: WO00071870

(56) Entgegenhaltungen:
- EP-A- 0 678 740
- EP-A- 0 814 248
- DE-A- 19 636 790
- KATO N ET AL: "PERFORMANCE OF THICK FILM NOX SENSOR ON DIESEL AND GASOLINE ENGINES" SAE TRANSACTIONS, JOURNAL OF ENGINES,US,WARRENDALE, PA, 1997, Seiten 1246-1253, XP000866024

## Beschreibung

Die Erfindung betrifft ein Verfahren zur definierten Fett-/Magersteuerung eines Verbrennungsgemisches mittels eines elektrochemischen Gassensors nach dem Oberbegriff des Anspruchs 1.

### Stand der Technik

Im Zuge der Kraftstoffeinsparung werden heute Verbrennungsmotoren bevorzugt mit einem mageren Verbrennungsgemisch betrieben. Dies führt dazu, daß im Abgaskatalysator die Stickoxide NOₓ nicht mehr vollständig abreagieren können, da die dazu benötigten reduzierenden Komponenten nicht mehr in ausreichendem Umfang vorliegen. Aufgrund dieser Tatsache kommen sogenannte NOₓ-Speicherkatalysatoren zum Einsatz, die in der Lage sind, überschüssiges NOₓ zu speichern. Dies setzt aber voraus, daß von Zeit zu Zeit der Katalysator regeneriert wird, sobald die Speicherkapazität des NOₓ-Speicherkatalysators erschöpft ist. Dazu wird das Verbrennungsgemisch kurzzeitig fett eingestellt, bis das gespeicherte NOₓ vollständig umgesetzt wurde und eine erneute Speicherphase eingeleitet werden kann. Um diese Fett-/Magersteuerung erfolgreich durchführen zu können, wird im Abgasstrom in Strömungsrichtung nach dem NOₓ-Speicherkatalysator sowohl ein Gassensor zur Bestimmung von NOₓ benötigt, der den am Ende der Speicherphase auftretenden Anstieg der NOₓ-Konzentration detektiert, als auch ein Gassensor zur Bestimmung der Sauerstoffkonzentration, der das am Ende der Regenerationsphase aus dem Katalysator austretende fette Verbrennungsabgas mit sehr geringem Sauerstoffgehalt analysiert.

Als NOₓ-Gassensor kann ein elektrochemischer Gassensor verwendet werden, wie er beispielsweise in der Anmeldung DE-199 12 102.8 beschrieben wird. Er beinhaltet zwei Meßgasräume mit jeweils einer Pumpzelle in verschiedenen Schichtebenen eines planaren, sauerstoffionenleitenden keramischen Trägers. Beide Pumpzellen bestehen aus je zwei auf einem Festelektrolyten aufgebrachten Elektroden. Das Meßgas strömt über eine erste Diffusionsöffnung in den ersten Meßgasraum ein, wo eine erste Pumpzelle einen konstant niedrigen Sauerstoffpartialdruck durch Hinein- oder Herauspumpen von Sauerstoff eingestellt. Mit Hilfe der elektrischen Spannung (elektromotorischen Kraft) einer ebenfalls im ersten Meßgasraum angeordneten Konzentrationszelle (Nernstzelle) wird über die Pumpspannung der Pumpzelle der Sauerstoffpartialdruck im ersten Meßgasraum eingeregelt. In einem zweiten Meßgasraum wird die Konzentration an NOₓ im Meßgas bestimmt, indem an der Oberfläche einer zur zweiten Pumpzelle gehörenden Elektrode das im Meßgas enthaltene NOₓ zersetzt und der dabei resultierende Sauerstoff zusammen mit dem noch im Meßgas verbliebenen Sauerstoff abgepumpt wird.

Um die Sauerstoffkonzentration im Abgasstrom zu bestimmen, wird ein weiterer Gassensor, beispielsweise eine Sauerstoffsonde, wie sie eine Lambdasonde darstellt, benötigt. Der Nachteil dieser Anordnung ist der Einbau zweier separater Gassensoren, was einen enormen Kostennachteil mit sich bringt.

### Vorteile der Erfindung

Das erfindungsgemäße Verfahren mit den kennzeichnenden Merkmalen des Anspruchs 1 hat den Vorteil, daß ein dem Verfahren zugrunde liegender NOₓ-Gassensor, wie er beispielsweise in der Anmeldung DE-199 12 102.8 beschrieben wird, nicht nur zur Bestimmung der NOₓ-Konzentration im Meßgas herangezogen wird, sondern auch zur Messung der dort vorliegenden Sauerstoffkonzentration. Dies erübrigt den Einbau eines separaten Sauerstoffsensors und ermöglicht die definierte Steuerung des Verbrennungsgemisches mit ein und demselben Sensor.

Durch die in den Unteransprüchen aufgeführten Maßnahmen sind vorteilhafte Weiterbildungen des im Anspruch 1 angegebenen Verfahrens möglich. Ferner wird gemäß dem Anspruch 1 beschrieben, daß für den Betrieb des Gassensors zur Sauerstoffbestimmung je nach Anforderung an die Genauigkeit der Messung mehrere unterschiedliche Möglichkeiten existieren und das Verfahren so auf eventuelle steuerungstechnische Erfordernisse besser abgestimmt werden kann.

### Zeichnung

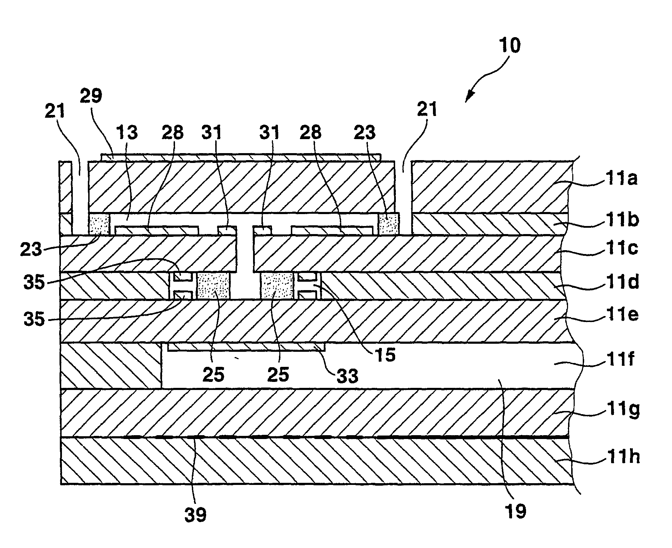

Die Erfindung wird anhand eines in der Zeichnung dargestellten Gassensors in der nachfolgenden Beschreibung näher erläutert. Die Figur zeigt einen Querschnitt durch einen Gassensor, der zur Durchführung des erfindungsgemäßen Verfahrens eingesetzt werden kann.

Ausführungsbeispiel

Die Figur zeigt einen prinzipiellen Aufbau eines planaren Sensorelements 10 eines dem Verfahren zugrundeliegenden Gassensors. Das Sensorelement 10 weist beispielsweise eine Mehrzahl von sauerstoffionenleitenden Festelektrolytschichten 11a, 11b, 11c, 11d, 11e, 11f, 11g und 11h auf. Die Festelektrolytschichten 11a-11h werden dabei als keramische Folien ausgeführt und bilden einen planaren keramischen Körper.

Das Sensorelement 10 beinhaltet einen ersten Meßgasraum 13 und einen zweiten Meßgasraum 15, die jeweils in unterschiedlichen Schichtebenen übereinander liegen. Unabhängig von den beiden Meßgasräumen 13, 15 ist beispielsweise in einer weiteren Schichtebene ein Luftreferenzkanal 19 angeordnet, der mit der Luftatmosphäre in Verbindung steht. Das Sensorelement 10 hat ferner zwei Gaseintrittsöffnungen 21, die das Meßgas in den ersten Meßgasraum 13 leiten. An den Eingängen zum ersten Meßgasraum 13 sind in Diffusionsrichtung des Meßgases erste Diffusionsbarrieren 23 ausgebildet, die beispielsweise aus porösem keramischem Material bestehen.

In Diffusionsrichtung des Meßgases ist zwischen den Meßgasräumen 13 und 15 eine weitere Diffusionsbarriere 25 ausgebildet. Der zweite Meßgasraum 15 ist beispielsweise kreisringförmig ausgeführt, so daß die zweite Diffusionsbarriere 25 ebenfalls eine kreisringförmige Gestalt annimmt.

Im ersten Meßgasraum 13 ist eine erste innere Elektrode 28 und eine zweite innere Elektrode 31 angeordnet. An der äußeren Großfläche der Festelektrolytschicht 11a befindet sich eine erste äußere Elektrode 29, die dem Abgas unmittelbar ausgesetzt ist. Im zweiten Meßraum 15 befindet sich eine dritte innere Elektrode 35, die im vorliegenden Ausführungsbeispiel aus zwei sich gegenüberliegenden, ringförmigen Teilelektroden besteht. Im Luftreferenzkanal 19 befindet sich eine weitere, der Luftatmosphäre ausgesetzte äußere Elektrode 33.

Um das Sensorelement 10 als NOₓ-Sensor betreiben zu können, ist die im Meßgasraum 15 angeordnete dritte innere Elektrode 35 aus einem Material ausgeführt, das NOₓ katalytisch zu zersetzen vermag. Ein solches Material ist beispielsweise Rhodium oder eine Rhodium/Platinlegierung. Wichtig ist, daß die in Strömungsrichtung vorgelagerten inneren Elektroden 28, 31 im wesentlichen keine katalytische Aktivität bezüglich der NOₓ-Zersetzung aufweisen. Das Elektrodenmaterial für alle Elektroden wird dabei in an sich bekannter Weise als Cermet eingesetzt, um mit den keramischen Folien zu versintern.

In den keramischen Grundkörper des Sensorelements 10 ist ferner zwischen zwei hier nicht dargestellten elektrischen Isolationsschichten ein Widerstandsheizer 39 eingebettet. Der Widerstandsheizer dient dem Aufheizen des Sensorelements 10 auf die notwendige Betriebstemperatur.

### Definierte Fett-/Magersteuerung zum Betrieb des NOₓ-Speicherkatalysators

Wird ein Verbrennungsmotor mit einem mageren Verbrennungsgemisch betrieben, entsteht am Abgaskatalysator ein Überschuß an nicht umgesetzten Stickoxiden NOₓ. Diese werden im Falle des NOₓ-Speicherkatalysators zwischengespeichert und erst in einer mit fettem Verbrennungsgemisch betriebenen Regenerationsphase umgesetzt.

Das oben beschriebene Sensorelement 10 wird nach dem erfindungsgemäßen Verfahren so betrieben, daß der Gassensor in Strömungsrichtung nach dem NOₓ-Speicherkatalysator angeordnet und während der Magerphase als NOₓ-Gassensor betrieben wird. Sobald die Speicherkapazität des NOₓ-Speicherkatalysators erschöpft ist, macht sich dies in einer erhöhten Konzentration an NOₓ im Abgas nach dem Katalysator bemerkbar. Dies wird vom Gassensor detektiert und führt zur Einleitung der Regenerationsphase mit fettem Verbrennungsgemisch. In dieser Phase wird dem NOₓ-Speicherkatalysator zwar ein fettes Abgasgemisch mit einem Lambda-Wert < 1 zugeführt, aufgrund der im Speicherkatalysator ablaufenden NOₓ-Reduktion verläßt das Abgas den Katalysator aber mit einem Lambda-Wert von ungefähr 1. Sobald das im Speicherkatalysator gespeicherte NOₓ vollständig umgesetzt wurde, sinkt der Lambda-Wert auch im Abgas nach dem Katalysator ab. In der Regenerationsphase wird der oben beschriebene Gassensor als Lambda-Sonde betrieben, die den nach Beendigung der NOₓ-Umsetzung sinkenden Lambda-Wert detektiert und zur Wiedereinleitung der Speicherphase führt.

Zur Umschaltung des Sensorelements 10 von der Betriebsweise als NOₓ-Sensor zur Betriebsweise als Lambda-Sonde und umgekehrt wird eine nicht dargestellte Schaltungsanordnung verwendet. Mit der Schaltungsanordnung werden die Elektroden des Sensorelements 10 entsprechend der geforderten Betriebsweise geschaltet.

### Betriebsweise als NOₓ-Sensor

Bei der Verwendung des Sensorelements 10 als NOₓ-Sensor werden die erste äußere Elektrode 29 und die erste innere Elektrode 28 als Pumpelektroden einer ersten Pumpzelle betrieben. Die zweite innere Elektrode 31 ist mit der als Referenzelektrode wirkenden weiteren äußeren Elektrode 33 als Konzentrationszelle geschaltet. An die Elektroden 28, 29 wird eine Pumpspannung angelegt, mittels der im ersten Meßgasraum 13 durch Zu- oder Abpumpen von Sauerstoff ein konstanter Sauerstoffpartialdruck eingestellt wird. Dabei wird die an die Elektroden 28, 29 angelegte Pumpspannung derart geregelt, daß sich an den Elektroden 31, 33 der Konzentrationszelle ein konstanter Spannungswert einstellt.

Die auf einen konstanten Sauerstoffpartialdruck eingestellte Meßatmosphäre gelangt nun über die Diffusionsbarriere 25 in den zweiten Meßgasraum 15. Im zweiten Meßgasraum 15 befindet sich eine dritte innere Elektrode 35, die zusammen mit der Referenzelektrode 33 als weitere Pumpzelle betrieben wird. Dabei wirkt aufgrund des katalytischen Materials die dritte innere Elektrode 35 als NOₓ-sensitive Elektrode, an der NOₓ gemäß der Reaktion NOₓ → 1/2 N₂ + x/2 O₂ zersetzt wird. Der dabei auftretende Pumpstrom stellt ein Maß für die Summe aus freiem und durch katalytische Zersetzung von NOₓ abgepumptem Sauerstoff dar.

### Betriebsweise als Sauerstoffsensor

Der in der Figur gezeigte Aufbau des Sensorelements 10 kann auch als sogenannter Breitbandsensor zur Bestimmung der Sauerstoffkonzentration genutzt werden. Dies erfolgt bei dieser Art Sensoren durch die Kombination einer Pump- mit einer Konzentrationszelle. Die erste Pumpzelle mit den Elektroden 28, 29 gewährleistet den Sauerstofftransport in bzw. aus dem Meßgasraum 13 des Sensorelements 10 in dem Umfang, daß an den Elektroden 31, 33 der Konzentrationszelle ein vorbestimmtes Potential erreicht wird. Als ein der Sauerstoffkonzentration proportionales Meßsignal wird der zwischen den Elektroden 28, 29 der Pumpzelle fließende Pumpstrom zur Einstellung des vorbestimmten Potentials herangezogen.

Als Einwand gegen diese Anordnung mag gelten, daß die innere Elektrode 28 so ausgeführt wurde, daß sie bezüglich der NOₓ-Zersetzung katalytisch inaktiv ist und keine thermodynamische Gleichgewichtseinstellung des Meßgases an der Pumpelektrodenoberfläche erlaubt. Dies wäre für eine exakte Bestimmung eines Lambda-Wertes aber nötig. Allerdings kann das NOₓ während des Regenerationsbetriebs mit den im Überschuß vorhandenen Fettgasbestandteilen des Abgases wie beispielsweise CO reagieren und wird somit in die Potentialbildung des Sauerstoffsensors einbezogen. Die Betriebsweise als Sauerstoffsensor ist demnach auch bezüglich NOₓ exakt.

Das Ziel dieser Erfindung ist allerdings nicht eine exakte Bestimmung des Lambda-Wertes, sondern die Detektion eines sinkenden Lambda-Wertes aus steuerungstechnischen Gründen.

Eine andere Ausführungsform mit dem zugrundeliegenden Sensorelement 10 besteht darin, daß als Pumpzelle nicht notwendigerweise die Elektroden 28, 29, bzw. für die Konzentrationszelle nicht unbedingt die Elektroden 31, 33 dienen müssen, sondern verschiedene Kombinationen der Elektroden zu Pumpund Konzentrationszellen denkbar sind. So können zusätzlich zur oben beschriebenen ersten Möglichkeit als Pumpelektroden auch die Elektroden 31, 33 der bisherigen Konzentrationszelle benutzt und die Elektroden 33, 35 der zweiten Pumpzelle als Konzentrationszelle geschaltet werden.

Eine weitere vorteilhafte Ausführungsform mit dem zugrundeliegenden Sensorelement 10 besteht darin, daß die erste äußere Elektrode 29 und die zweite äußere Elektrode 33 als Nernstzelle betrieben werden, wobei die erste äußere Elektrode 29 die abgasseitige Elektrode und die zweite äußere Elektrode 33 die Luftreferenzelektrode eines konventionellen Breitbandsensors darstellen. Während des Regenerationsbetriebs zeigt diese Sonde ein Spannungssignal für Lambda ≅ 1 von 300-500 mV. Die am Ende des Regenerationsbetriebs sinkende Sauerstoffkonzentration wird als Potentialsprung von 300-500 mV auf etwa 800 mV detektiert.

Zur Durchführung des erfindungsgemäßen Verfahrens ist nicht nur ein Gassensor mit dem beschriebenen Aufbau des Sensorelements 10 geeignet. Es sind auch weitere Ausgestaltungen von Sensorelementen denkbar, die die beschriebene Betriebsweise als NOₓ-sensitiver Sensor oder als Gassensor zur Bestimmung der Sauerstoffkonzentration ermöglichen.

## Patentansprüche

1. Verfahren zur definierten Fett-/Magersteuerung eines Verbrennungsgemisches für den Betrieb eines Nox-Speicherkatalysators, der bei einem mager eingestellten Verbrennungsgemisch in einer Speicherphase NOx speichert und bei einem fett eingestellten Verbrennungsgemisch in einer Regenerationsphase das gespeicherte NOx umsetzt, wobei zur Überwachung der Speicherphase die NOx-Konzentration und zur Überwachung der Regenerationsphase die Sauerstoffkonzentration in Verbrennungsabgasen in Strömungsrichtung hinter dem NOx-Speicherkatalysator herangezogen wird, und wobei die NOx-Konzentration und die Sauerstoffkonzentration von ein und demselben elektrochemischen Gassensor ermittelt wird, **dadurch gekennzeichnet, daß** ein Meßsignal des Gassensors, während ein fett eingestelltes Verbrennungsgemisch vorliegt, bei Unterschreitung einer bestimmten Sauerstoffkonzentration die Einleitung der Speicherphase bewirkt.

2. Verfahren nach Anspruch 1, **dadurch gekennzeichnet, daß** als elektrochemischer Gassensor ein Gassensor mit mindestens zwei Pumpzellen und einer Konzentrationszelle verwendet wird, daß zur Bestimmung der während der Speicherphase in den Verbrennungsabgasen enthaltenen NOₓ-Konzentration mittels der ersten Pumpzelle durch Sauerstofftransport ein niedriger Sauerstoffpartialdruck eingestellt wird, die Konzentrationszelle zur Kontrolle der Sauerstoffkonzentration und die zweite Pumpzelle zum Transport des freien und des aus der Zersetzung von NOₓ resultierenden Sauerstoffs herangezogen wird, und daß zur Bestimmung der in den Verbrennungsabgasen enthaltenen Sauerstoffkonzentration mittels einer Pumpzelle durch Sauerstofftransport ein niedriger Sauerstoffpartialdruck eingestellt wird und die Konzentrationszelle oder eine der Pumpzellen der Kontrolle der Sauerstoffkonzentration dient.

3. Verfahren nach Anspruch 2, **dadurch gekennzeichnet, daß** zur Bestimmung der Sauerstoffkonzentration die erste der beiden Pumpzellen während der Regenerationsphase durch Sauerstofftransport einen niedrigen Sauerstoffpartialdruck bewirkt und die Konzentrationszelle der Kontrolle der Sauerstoffkonzentration dient.

4. Verfahren nach Anspruch 2, **dadurch gekennzeichnet, daß** zur Bestimmung der Sauerstoffkonzentration die zweite der beiden Pumpzellen während der Regenerationsphase als Konzentrationszelle betrieben wird und der Kontrolle der Sauerstoffkonzentration dient, während die Konzentrationszelle als Pumpzelle betrieben wird und durch Sauerstofftransport einen niedrigen Sauerstoffpartialdruck im Gassensor bewirkt.

5. Verfahren nach Anspruch 2, **dadurch gekennzeichnet, daß** die erste äußere Elektrode (29) und die zweite äußere Elektrode (33) zu einer nach dem potentiometrischen Meßprinzip arbeitenden Konzentrationszelle (Nernstzelle) geschaltet werden und die zwischen den Elektroden (29, 33) auftretende Potentialdifferenz als Meßsignal zur Bestimmung der Sauerstoffkonzentration herangezogen wird.

6. Verfahren nach Anspruch 2, **dadurch gekennzeichnet, daß** ein Meßsignal des Gassensors, während ein mager eingestelltes Verbrennungsgemisch vorliegt, bei Überschreitung einer bestimmten NOₓ-Konzentration die Einleitung der Regenerationsphase bewirkt.

## Claims

1. Method for defined rich/lean control of a combustion mix for operation of an NOx storage catalytic converter, which, with a combustion mix which is set to be lean, stores NOx in a storage phase and, with a combustion mix which is set to be rich, converts the stored NOx in a regeneration phase, in which method the NOx concentration in combustion exhaust gases downstream of the NOx storage catalytic converter, as seen in the direction of flow, is used to monitor the storage phase and the oxygen concentration in combustion exhaust gases downstream of the NOx storage catalytic converter, as seen in the direction of flow, is used to monitor the regeneration phase, and in which method the NOx concentration and the oxygen concentration are determined by the same electrochemical gas sensor, **characterized in that** a measurement signal from the gas sensor, while the combustion mix is set to be rich, is used to initiate the storage phase when it drops below a defined oxygen concentration.

2. Method according to Claim 1, **characterized in that** the electrochemical gas sensor used is a gas sensor having at least two pumping cells and a concentration cell, **in that**, to determine the NOₓ concentration contained in the combustion exhaust gases during the storage phase, a low oxygen partial pressure is set by oxygen transfer by means of the first pumping cell, the concentration cell is used to check the oxygen concentration and the second pumping cell is used to transfer the free oxygen and the oxygen which results from the decomposition of NOₓ, and **in that**, to determine the oxygen concentration which is contained in the combustion exhaust gases, a low oxygen partial pressure is set by oxygen transfer by means of one pumping cell and the concentration cell or one of the pumping cells is used to check the oxygen concentration.

3. Method according to Claim 2, **characterized in that**, to determine the oxygen concentration, the first of the two pumping cells, during the regeneration phase, produces a low oxygen partial pressure by means of oxygen transfer, and the concentration cell is used to check the oxygen concentration.

4. Method according to Claim 2, **characterized in that**, to determine the oxygen concentration, the second of the two pumping cells, during the regeneration phase, is operated as a concentration cell and is used to check the oxygen concentration, while the concentration cell is operated as a pumping cell and produces a low oxygen partial pressure in the gas sensor by means of oxygen transfer.

5. Method according to Claim 2, **characterized in that** the first outer electrode (29) and the second outer electrode (33) are connected to form a concentration cell (Nernst cell), which operates according to the potentiometric measurement principle, and the potential difference which occurs between the electrodes (29, 33) is used as measurement signal for determining the oxygen concentration.

6. Method according to Claim 2, **characterized in that** a measurement signal from the gas sensor, while a combustion mix which has been set to be lean is present, causes the regeneration phase to be initiated when a specific NOₓ concentration is exceeded.

## Revendications

1. Procédé pour obtenir de manière définie une commande riche/pauvre d'un mélange combustible pour le fonctionnement d'un catalyseur à stockage d'oxydes d'azote NOₓ, qui stocke les oxydes NOₓ en phase de stockage pour un mélange combustible réglé sur un niveau pauvre et qui convertit les oxydes NOₓ stockés au cours d'une phase de régénération pour un mélange combustible réglé sur un niveau riche, selon lequel
pour surveiller la phase de stockage on utilise la concentration en oxydes NOₓ et pour surveiller la phase de régénération on utilise la concentration en oxygène dans les gaz de combustion, en aval du catalyseur de stockage d'oxydes NOₓ selon le sens de l'écoulement des gaz, avec
un unique et même capteur électrochimique de gaz qui détermine la concentration en oxydes d'azote NOₓ et la concentration en oxygène,
**caractérisé en ce que**
pendant qu'existe un mélange combustible réglé sur un niveau riche, le générateur de gaz fournit un signal de mesure qui en cas de dépassement vers le bas d'une certaine concentration d'oxygène démarre la phase de stockage.

2. Procédé selon la revendication 1,
**caractérisé en ce que**
le capteur de gaz électrochimique est un capteur de gaz ayant au moins deux cellules de pompage et une cellule de concentration,
et pour déterminer la concentration en oxydes d'azote NOₓ contenue dans les gaz de combustion dans la phase de stockage on règle une faible pression partielle d'oxygène par transport d'oxygène par la première cellule de pompage, on utilise la cellule de concentration pour contrôler la concentration en oxygène et la seconde cellule de pompage pour transporter l'oxygène libre et l'oxygène résultant de la décomposition des oxydes NOₓ, et
pour déterminer la concentration en oxygène contenue dans les gaz de combustion on règle une pression partielle d'oxygène faible, par transport d'oxygène par une cellule de pompage, et la cellule de concentration ou l'une des cellules de pompage sert au contrôle de la concentration en oxygène.

3. Procédé selon la revendication 2,
**caractérisé en ce que**
pour déterminer la concentration en oxygène, la première des deux cellules de pompage produit une faible pression partielle d'oxygène pendant la phase de régénération, par transport d'oxygène, et la cellule de concentration sert à contrôler la concentration en oxygène.

4. Procédé selon la revendication 2,
**caractérisé en ce que**
pour déterminer la concentration en oxygène, la seconde des deux cellules de pompage fonctionne comme cellule de concentration pendant la phase de régénération et sert à contrôler la concentration en oxygène, pendant que la cellule de concentration fonctionne comme cellule de pompage et crée dans le capteur de gaz une pression partielle d'oxygène faiblc par transport d'oxygène.

5. Procédé selon la revendication 2,
**caractérisé en ce que**
la première électrode extérieure (29) et la seconde électrode extérieure (33) sont branchées suivant une cellule de concentration fonctionnant selon le principe de mesure potentiométrique (cellule de Nernst), et on utilise la différence de potentiel entre les électrodes (29, 33) comme signal de mesure pour déterminer la concentration en oxygène.

6. Procédé selon la revendication 2,
**caractérisé en ce qu'**
en présence d'un mélange combustible maigre, un signal de mesure du capteur de gaz en cas de dépassement d'une certaine concentration en oxydes NOₓ démarre la phase de régénération.
